# EUROPEAN PATENT SPECIFICATION

(11) **EP 2 790 844 B1**
(45) Date of publication and mention of the grant of the patent: **15.06.2016**
(21) Application number: 12820991.3
(22) Date of filing: 11.12.2012
(51) Int. Cl.: B09B 1/00, B09B 3/00, A01K 1/01, A01K 31/04, E01H 1/00, E01H 1/12, A01K 23/00

(54) **DISPOSAL OF ORGANIC WASTE**
ENTSORGUNG ORGANISCHER ABFÄLLE
DESTRUCTION DE DÉCHET ORGANIQUE

(30) Priority: 12.12.2011 US 201113316586
(43) Date of publication of application: 22.10.2014
(73) Proprietor: Paulee Cleantec Ltd., 52521 Ramat Gan (IL)
(72) Inventor: SHOSEYOV, Oded, 60850 Shoham (IL); HALPERIN, Oded, Bazra 6094000 (IL)
(74) Representative: Becker Kurig Straus
(86) International application number: PCT/US2012/068869
(87) International publication number: WO 2013/090224

(56) References cited:
- US-A1- 2007 062 233

## Description

The present invention relates generally to apparatus for dosing an oxidizing agent for cost effective disposing of pet, farm and wild animal and human organic waste and the like and more particularly to an improved apparatus by which organic waste and the like may be effectively treated by an oxidizing agent, to reduce its water content, by exothermic reaction, reducing bad odor, microbial contamination, parasites and infectious disease.

### BACKGROUND OF THE INVENTION

Due to the increasing population of human and animals in the world, an ever increasing level of organic waste poses huge ecological, health and economic problems. Document US 2007/0062233 A1 discloses an installation which allows to manufacture fertilizer by addition of oxidizer and alkaline agents to a paste obstained from a dry composition containing biosolids from, for example, wastewater treatment plants.

Various methods and systems have been developed to deal with these problems in the past. Sewage systems have the disadvantage of requiring expensive infrastructure. Chemical toilets have the disadvantage of requiring delivery and disposal of the chemically treated waste in a well regulated disposal site.

Incinerator toilets have also been developed which sterilize the organic waste, but typically end up with solids and liquids that require disposal in a central waste treatment system. Document WO 2009/057108 A1 discloses an apparatus for pet waste disposal where oxidizing agent is added and mixed to the waste in a portable receptacle.

### SUMMARY OF THE INVENTION

The present invention relates generally to apparatus for dosing an oxidizing agent for cost effective disposing of pet, farm and wild animal and human organic waste and the like and more particularly to an improved apparatus by which organic waste and the like may be effectively treated by an oxidizing agent, to reduce its water content, by an exothermic reaction, to reduce bad odor, microbial contamination, parasites and infectious disease.

The present invention seeks to provide improved apparatus for dosing an appropriate amount of an oxidizing agent, such as potassium permanganate or any other oxidizing agent, onto or into organic waste collected in a reactor to ensure that an effective amount causes an exothermic reaction with semi-solid organic matter, resulting in water vapor. This reduces the weight of the waste matter, and reduces microbial load, infectious agents and bad odors.

The apparatus includes a reaction container, mixing device and a source of oxidizing agent such as but not limited to potassium permanganate that is added to the organic waste to initiate an exothermic reaction in which the water is evaporated, the organic matter is oxidized to give mainly carbon dioxide, nitrogen oxides which are released as volatiles and what is left is sterile odorless ash which is an order of magnetite lighter and can be used as a fertilizer or even as a source of minerals for the chemical industry.

The invention has the potential to reduce significantly the cost of organic waste operations, improve sanitation and health, reduce evolution of green house gasses such as methane that are harmful to the ozone layer, and extract useful energy from the waste.

There is thus provided in accordance with an embodiment of the present invention apparatus including a receptacle for holding therein organic waste, a first dispenser operative to dispense an oxidizing agent to the organic waste so as to cause an exothermic reaction that results in combustion of the organic waste, and a second dispenser operative to dispense a reducing agent that neutralizes a residual amount of the oxidizing agent that remains after the exothermic reaction.

In accordance with an embodiment of the present invention a sensor is provided for sensing the residual amount of the oxidizing agent, the sensor being in communication with the second dispenser so that the second dispenser dispenses the reducing agent in accordance with information from the sensor.

For example, the sensor may include a temperature sensor and the second dispenser dispenses the reducing agent in accordance with products of the exothermic reaction having reached a predetermined temperature after a predetermined time.

As another example, the sensor may include a humidity sensor and the second dispenser dispenses the reducing agent in accordance with products of the exothermic reaction having reached a predetermined humidity after a predetermined time.

As another example, the sensor may include a chemical sensor and the second dispenser dispenses the reducing agent in accordance with products of the exothermic reaction having reached a predetermined chemical composition after a predetermined time.

As another example, the sensor may include a weight sensor and the second dispenser dispenses the reducing agent in accordance with products of the exothermic reaction having reached a predetermined weight after a predetermined time.

As another example, the operator estimates (e.g., visually) the amount of the organic waste, commands the first dispenser to release an appropriate amount of the oxidizing agent with some excess, and the second dispenser dispenses the reducing agent after a predetermined time.

The reaction of the reducing agent with the oxidizing agent may cause a change in color of the oxidizing agent. The reaction of the reducing agent neutralizes the oxidizing potential of the disposed matter, thereby eliminating the risk of fire.

The receptacle may be, a portion of a dog feces collector, a cat litter box, a bird cage, a farm animal feces collector or a trash disposal device.

### BRIEF DESCRIPTION OF THE DRAWINGS

The present invention will be understood and appreciated more fully from the following detailed description, taken in conjunction with the drawings in which:
Fig. 1 is a simplified illustration of apparatus 10 for disposal of organic waste, constructed and operative in accordance with a non-limiting embodiment of the present invention; and
Figs. 2-8 are simplified illustrations of receptacles used to carry out the invention, in accordance with embodiments of the invention.

### DETAILED DESCRIPTION OF EXEMPLARY EMBODIMENTS

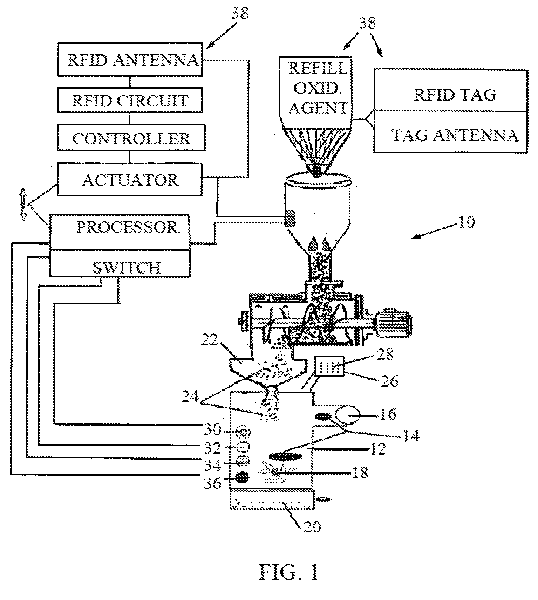

Reference is now made to Fig. 1, which illustrates apparatus 10 for disposal of organic waste, constructed and operative in accordance with a non-limiting embodiment of the present invention.

Apparatus 10 includes a receptacle 12 for holding therein organic waste 14, such as but not limited to, excreta of a dog, cat or any other domesticated or wild animal. Receptacle 12 may have an inlet 16 for introduction therein of organic waste 14, and a blender (mixer) 18 for mixing and/or grinding (chopping, pulverizing, etc.) organic waste 14 for more efficient oxidation thereof. A collection receptacle 20 may be provided for collecting therein products of oxidation of organic waste 14.

A first dispenser 22 dispenses an oxidizing agent 24 to organic waste 14 so as to cause an exothermic reaction that causes combustion of organic waste 14, preferably into ash. Non-limiting examples of oxidizing agent 24 include a peroxide, such as hydrogen peroxide, calcium peroxide, and/or magnesium peroxide, etc.; a persulphate, such as sodium persulphate, potassium persulphate, and/or ammonium persulphate, etc; ozone; a permanganate, such as sodium permanganate, potassium permanganate, etc; chlorine dioxide; and/or a halogen, such as chlorine, bromine, iodine, and/or fluorine, etc. The oxidizing agents can be used each alone or in admixture of two or more, and may be liquid, solid, gel and the like.

A second dispenser 26 dispenses a reducing agent 28 that neutralizes a residual amount of oxidizing agent 24 that remains after the exothermic reaction. Non-limiting examples of reducing agent 28 include ascorbic acid, metal sulfites, metal hydrogensulfites, metal thiosulfates, metal metabisulfites, metal dithionites, phosphorous acid (H₂PHO₃) and metal salts thereof, hypophosphorous acid (HPH₂O₂) and metal salts thereof, and the like. The metal sulfites, the metal hydrogensulfites, the metal thiosulfates, the metal dithionites, and the metal salts of phosphorous acid and hypophosphorous acid include, for example, alkali metal salts and alkaline earth metal salts. Among them, examples include sodium sulfite (Na₂SO₃), sodium hydrogensulfite (NaHSO₃), sodium thiosulfate (Na₂S₂O₃), sodium dithionite (Na₂S₂O₄), sodium phosphite (Na₂PHO₃), sodium hypophosphite (NaPH₂O₂) and potassium metabisulfite (K₂S₂O₅). The reducing agents can be used each alone or in admixture of two or more, and may be liquid, solid, gel and the like.

Second dispenser 26 may dispense reducing agent 28 into receptacle 12, or alternatively may dispense reducing agent 28 onto products of the oxidation process outside of receptacle 12.

In accordance with an embodiment of the present invention a sensor is provided for sensing the residual amount of oxidizing agent 24. The sensor is in communication with second dispenser 26 so that second dispenser 26 dispenses reducing agent 28 in accordance with information from the sensor.

For example, the sensor may include a temperature sensor 30 and second dispenser 26 dispenses reducing agent 28 in accordance with products of the exothermic reaction having reached a predetermined temperature after a predetermined time. As one example, after the onset of the exothermic reaction which results in a rise in temperature, the dispenser continues to add small predetermined quantities of the oxidizer as long as the temperature does not decrease. When the temperature starts to decrease, this indicates to the system that the organic matter has been consumed and dispensing is stopped.

As another example, the sensor may include a humidity sensor 32 and second dispenser 26 dispenses reducing agent 28 in accordance with products of the exothermic reaction having reached a predetermined humidity after a predetermined time.

As another example, the sensor may include a chemical sensor 34 and second dispenser 26 dispenses reducing agent 28 in accordance with products of the exothermic reaction having reached a predetermined chemical composition after a predetermined time.

As another example, the sensor may include a weight sensor 36 and second dispenser 26 dispenses reducing agent 28 in accordance with products of the exothermic reaction having reached a predetermined weight after a predetermined time.

For example, reduction of humidity indicates the termination of water removal. Other sensors that may be installed to monitor the reaction are gas sensors that may monitor CO₂, CO, NO or any other volatile substance which is emitted from the reactor. Other sensors may be conductivity, resistance, colorimetric or any physical or chemical parameter that may be correlated with the exothermic reaction of oxidizing agent 24 and the organic matter. The sensor may be a transducer that determines the weight of the organic waste which sends the signal to a microprocessor which controls the dispenser. Alternatively, the sensor may determine the volume of the organic waste.

The reaction of reducing agent 28 with oxidizing agent 24 may cause a change in color of oxidizing agent 24. For example, this eliminates the oxidizing potential of the matter and prevents purple staining that is typical of potassium permanganate.

The dispensers may be controlled and actuated with RF identification system 38, including RFID tags, antennas, controllers and actuating mechanisms, for example.

Determination of the appropriate amount of reducing agent 28 for neutralizing the residual amount of oxidizing agent 24 that remains after the exothermic reaction is unpredictable without sensing with the sensor, and would otherwise require extensive experiments with different types of feces with different relative humidities.

Instead of the control loop or automatic dispensing described above, the amount of oxidizing agent 24 or reducing agent 28 released to the reaction may be done manually. A manual dosing device may be a dispenser that releases predetermined quantities suitable to perform the reaction. The dispensed amount may be estimated by the user based on manufacturer recommendations and/or previous experience. The dispenser may be of type that dispenses a constant or variable dose of powdered, granulated or capsulated material. The dispenser for oxidizing agent 24 may be as simple as pre-packed capsules or granules at a dose suitable to cause an exothermic reaction with a typical amount of organic waste. The dispenser for reducing agent 28 may be as simple as pre-packed capsules or granules at a dose suitable to neutralize the residual oxidizing agent 24.

The reactor may be mobile or stationary, disposable or permanent, part of a collecting device or a separate device. Heat generated by the exothermic reaction may be converted by thermoelectric devices to electricity. Alternatively, steam generated by the exothermic reaction may be utilized to operate an electric generator.

### Example of oxidation of waste and reduction of excess oxidant:

100 gr of dog feces were mixed with four 2.5 gr portions of potassium permanganate. After about 20 seconds an exothermic reaction occurred, temperature rose to about 100°C, and a dry odorless material appeared. Two gr of potassium metabisulfite were added and mixed with the remaining solid. The resultant ash was disposed directly on a green lawn. No purple stains and no phytotoxic signs were observed in a period of 30 days.

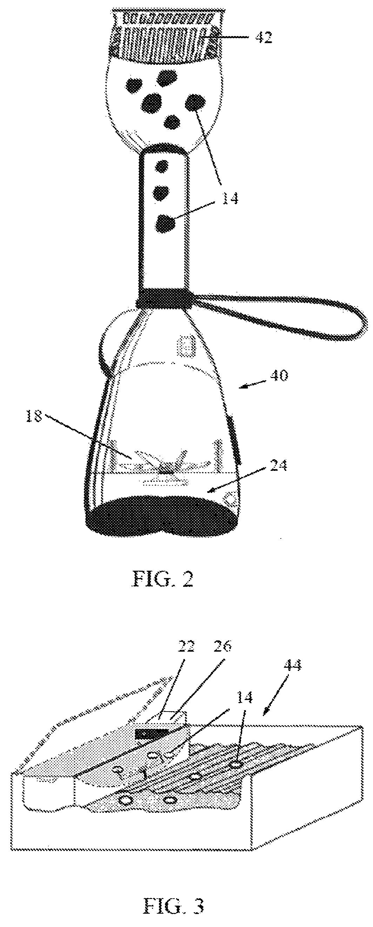

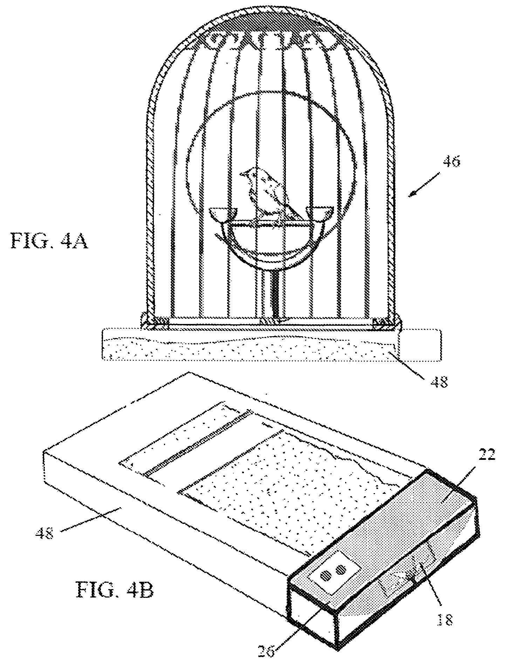

Figs. 2-8 illustrate different, non-limiting examples of receptacles used to carry out the invention. The receptacle may be, without limitation, a portion of a dog feces collector 40, provided with a scoop 42 for collecting exudates, as seen in Fig. 2. In Fig. 3, the receptacle is a cat litter box 44, wherein the first and second dispensers 22 and 26 are provided as cartridges or may be built-in to the litter box 44. In Figs. 4A-4B, the receptacle is a bird cage 46, wherein the first and second dispensers 22 and 26 are provided as cartridges or may be built-in to a waste tray 48 of the cage 46.

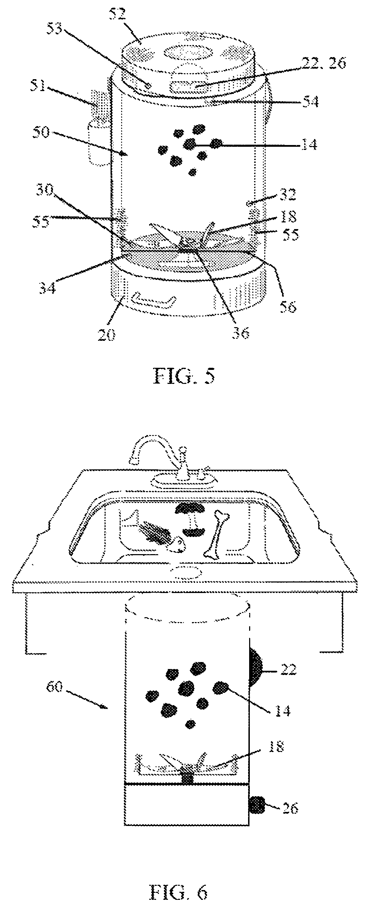

In Fig. 5, the receptacle is a farm animal feces collector 50. Collector 50 may include a scoop 51 for collecting exudates. A cover 52 may be provided with an electric eye 53 or other suitable sensor for automatic opening of the cover. The first and second dispensers 22 and 26 may be provided as cartridges for insertion into cover 52. One or more control buttons 54 may be provided for operating the device. Brushes 55 may be provided on a rotating axle 56 for cleaning sides of collector 50.

In Fig. 6, the receptacle is a trash disposal device 60, which may be installed under a kitchen sink or the like.

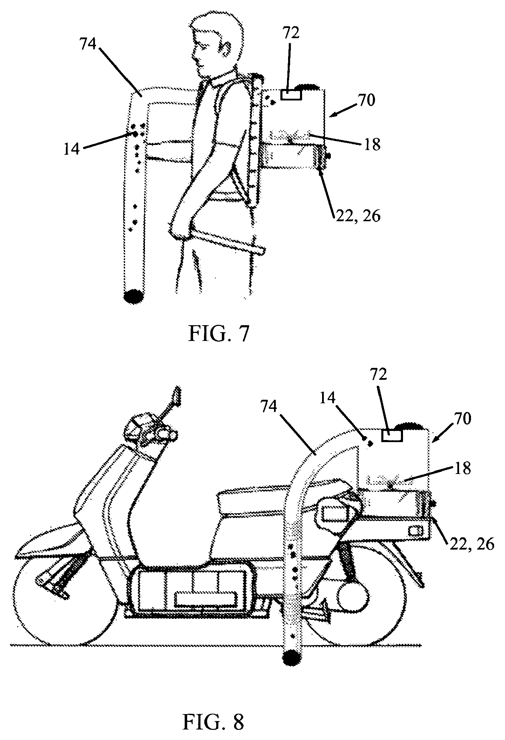

In Figs. 7 and 8, a receptacle 70 is provided with a vacuum pump 72, which draws and collects organic waste 14 via a collection tube 74 into receptacle 70. In Fig. 7, receptacle 70 is a backpack, whereas in Fig. 8, it is mounted on a vehicle.

## Claims

1. Apparatus (10) comprising :
a receptacle (12) for holding therein organic waste (14), the receptacle comprising a portion of a dog feces collector (40) or a cat litter box (44) or a bird cage (46) or a farm animals feces collector (50) or a trash disposal device (60);
a first dispenser (26) operative to dispense an oxidizing agent (24) to said organic waste (14) so as to cause an exothermic reaction that results in combustion of said organic waste (14);
a mixing device (18);
**characterized in that** the apparatus (10) further comprises a second dispenser operative to dispense a reducing agent (28) that neutralizes a residual amount of said oxidizing agent (24) that remains after said exothermic reaction.

2. The apparatus according to claim 1, further comprising a sensor for sensing said residual amount of said oxidizing agent (24), said sensor being in communication with said second dispenser (26) so that said second dispenser (26) dispenses said reducing agent (28) in accordance with information from said sensor.

3. The apparatus according to claim 2, wherein said sensor comprises a temperature sensor (30) and said second dispenser (26) dispenses said reducing agent (28) in accordance with products of the exothermic reaction having reached a predetermined temperature after a predetermined time.

4. The apparatus according to claim 2, wherein said sensor comprises a humidity sensor (32) and said second dispenser (26) dispenses said reducing agent (28) in accordance with products of the exothermic reaction having reached a predetermined humidity after a predetermined time.

5. The apparatus according to claim 2, wherein said sensor comprises a chemical sensor (34) and said second dispenser (26) dispenses said reducing agent (28) in accordance with products of the exothermic reaction having reached a predetermined chemical composition after a predetermined time.

6. The apparatus according to claim 2, wherein said sensor comprises a weight sensor (36) and said second dispenser (26) dispenses said reducing agent (28) in accordance with products of the exothermic reaction having reached a predetermined weight after a predetermined time.

7. The apparatus according to claim 2, wherein said first dispenser (22) dispenses said oxidizing agent (24) upon a user visual observation of an amount of said organic waste, and said second dispenser dispenses said reducing agent (28) after a predetermined time.

8. The apparatus according to claim 1, wherein reaction of said reducing agent (28) with said oxidizing agent (24) causes a change in color of said oxidizing agent (24).

9. The apparatus according to claim 1, wherein said receptacle comprises a vacuum pump (72), which draws and collects said organic waste via a collection tube (74) into said receptacle (70).

## Patentansprüche

1. Vorrichtung (10) umfassend:
einen Behälter (12), um darin organischen Abfall (14) aufzunehmen, wobei der Behälter einen Abschnitt eines Hundefäkalien-Auffängers (40) oder eines Katzenstreu-Kastens (44) oder eines Vogelkäfigs (46) oder eines Nutztierfäkalien-Auffängers (50) oder eines Müllentsorgungs-Geräts (60) umfasst;
eine erste Abgabeeinrichtung (26), betriebsfähig, um ein Oxidationsmittel (24) an den organischen Abfall (14) abzugeben, so dass eine exotherme Reaktion verursacht wird, welche im Verbrennen des organischen Abfalls (14) resultiert;
ein Mischgerät (18);
**dadurch gekennzeichnet, dass** die Vorrichtung (10) weiter eine zweite Abgabeeinrichtung umfasst, betriebsfähig, um ein Reduktionsmittel (28) abzugeben, welches eine Restmenge des Oxidationsmittels (24) neutralisiert, das nach der exothermen Reaktion übrigbleibt.

2. Vorrichtung gemäß Anspruch 1, weiter umfassend einen Sensor zum Erfassen der Restmenge des Oxidationsmittels (24), wobei der Sensor in Verbindung mit der zweiten Abgabeeinrichtung (26) steht, so dass die zweite Abgabeeinrichtung (26) das Reduktionsmittel (28) in Übereinstimmung mit Informationen von dem Sensor abgibt.

3. Vorrichtung gemäß Anspruch 2, wobei der Sensor einen Temperatursensor (30) umfasst und die zweite Abgabeeinrichtung (26) das Reduktionsmittel (28) in Übereinstimmung damit abgibt, dass Produkte der exothermen Reaktion eine vorbestimmte Temperatur nach einer vorbestimmten Zeit erreicht haben.

4. Vorrichtung gemäß Anspruch 2, wobei der Sensor einen Feuchtigkeitssensor (32) umfasst und die zweite Abgabeeinrichtung (26) das Reduktionsmittel (28) in Übereinstimmung damit abgibt, dass Produkte der exothermen Reaktion eine vorbestimmte Feuchtigkeit nach einer vorbestimmten Zeit erreicht haben.

5. Vorrichtung gemäß Anspruch 2, wobei der Sensor einen chemischen Sensor (34) umfasst und die zweite Abgabeeinrichtung (26) das Reduktionsmittel (28) in Übereinstimmung damit abgibt, dass Produkte der exothermen Reaktion eine vorbestimmte chemische Zusammensetzung nach einer vorbestimmten Zeit erreicht haben.

6. Vorrichtung gemäß Anspruch 2, wobei der Sensor einen Gewichtssensor (36) umfasst und die zweite Abgabeeinrichtung (26) das Reduktionsmittel (28) in Übereinstimmung damit abgibt, dass Produkte der exothermen Reaktion ein vorbestimmtes Gewicht nach einer vorbestimmten Zeit erreicht haben.

7. Vorrichtung gemäß Anspruch 2, wobei die erste Abgabeeinrichtung (22) das Oxidationsmittel (24) abgibt auf eine visuelle Benutzer-Beobachtung einer Menge des organischen Abfalls, und die zweite Abgabeeinrichtung das Reduktionsmittel (28) nach einer vorbestimmten Zeit abgibt.

8. Vorrichtung gemäß Anspruch 1, wobei die Reaktion des Reduktionsmittels (28) mit dem Oxidationsmittel (24) eine Farbänderung des Oxidationsmittels (24) verursacht.

9. Vorrichtung gemäß Anspruch 1, wobei der Behälter eine Vakuumpumpe (72) umfasst, welche den organischen Abfall über ein Sammelrohr (74) in den Behälter (70) saugt und sammelt.

## Revendications

1. Appareil (10) comprenant :
un réceptacle (12) pour contenir à l'intérieur un déchet organique (14), le réceptacle comprenant une partie d'un collecteur de matières fécales canines (40) ou d'une litière pour chat (44) ou d'une cage à oiseaux (46) ou d'un collecteur de matières fécales d'animaux de la ferme (50) ou un dispositif d'élimination d'ordures (60) ;
un premier distributeur (26) opérationnel pour distribuer un agent d'oxydation (24) sur ledit déchet organique (14) de sorte à provoquer une réaction exothermique qui entraîne une combustion dudit déchet organique (14) ;
un dispositif de mélange (18) ;
**caractérisé en ce que** l'appareil (10) comprend en outre un second distributeur opérationnel pour distribuer un agent de réduction (28) qui neutralise une quantité résiduelle dudit agent d'oxydation (24) qui reste après ladite réaction exothermique.

2. Appareil selon la revendication 1, comprenant en outre un capteur pour détecter ladite quantité résiduelle dudit agent d'oxydation (24), ledit capteur étant en communication avec ledit second distributeur (26) de sorte que ledit second distributeur (26) distribue ledit agent de réduction (28) en fonction des informations provenant dudit capteur.

3. Appareil selon la revendication 2, dans lequel ledit capteur comprend un capteur de température (30) et ledit second distributeur (26) distribue ledit agent de réduction (28) une fois que les produits de la réaction exothermique ont atteint une humidité prédéfinie après un temps prédéfini.

4. Appareil selon la revendication 2, dans lequel ledit capteur comprend un capteur d'humidité (32) et ledit second distributeur (26) distribue ledit agent de réduction (28) une fois que les produits de la réaction exothermique ont atteint une humidité prédéfinie après un temps prédéfini.

5. Appareil selon la revendication 2, dans lequel ledit capteur comprend un capteur chimique (34) et ledit second distributeur (26) distribue ledit agent de réduction (28) une fois que les produits de la réaction exothermique ont atteint une humidité prédéfinie après un temps prédéfini.

6. Appareil selon la revendication 2, dans lequel ledit capteur comprend un capteur de poids (36) et ledit second distributeur (26) distribue ledit agent de réduction (28) une fois que les produits de la réaction exothermique ont atteint une humidité prédéfinie après un temps prédéfini.

7. Appareil selon la revendication 2, dans lequel ledit premier distributeur (22) distribue ledit agent d'oxydation (24) lors d'une observation visuelle par l'utilisateur d'une quantité dudit déchet organique, et ledit second distributeur distribue ledit agent de réduction (28) après un temps prédéfini.

8. Appareil selon la revendication 1, dans lequel la réaction dudit agent de réduction (28) avec ledit agent d'oxydation (24) provoque un changement de couleur dudit agent d'oxydation (24).

9. Appareil selon la revendication 1, dans lequel ledit réceptacle comprend une pompe à vide (72) qui puise et collecte ledit déchet organique par le biais d'un tube de collecte (74) dans ledit réceptacle (70).
